# EUROPÄISCHE PATENTSCHRIFT

(11) **EP 2 818 733 B1**
(45) Veröffentlichungstag und Bekanntmachung des Hinweises auf die Patenterteilung: **23.05.2018**
(21) Anmeldenummer: 14172606.7
(22) Anmeldetag: 16.06.2014
(51) Int. Cl.: F16B 2/24, F21V 19/00

(54) **Befestigungselement, Befestigungssystem mit Befestigungselement und Verfahren zum Bestücken eines Leuchtenträgers mit einem elektronischen Modul mittels des Befestigungssystems**
Fastening element, fastening system with the fastening element and method for fitting a light holder with an electronic module by means of the fastening system
Élément de fixation, système de fixation doté de l'élément de fixation et procédé destiné à équiper un support d'éclairage d'un module électronique au moyen du système de fixation

(30) Priorität: 14.06.2013 DE 102013211149
(43) Veröffentlichungstag der Anmeldung: 31.12.2014
(73) Patentinhaber: ITZ Innovations- und Technologiezentrum GmbH, 59759 Arnsberg (DE)
(72) Erfinder: Drees, Frank, 58840 Plettenberg (DE)
(74) Vertreter: Lippert Stachow Patentanwälte Rechtsanwälte

(56) Entgegenhaltungen:
- EP-A1- 2 138 757
- DE-A1-102012 206 695
- DE-U1- 29 623 048
- DE-U1-202012 001 835

## Beschreibung

Die Erfindung betrifft ein Befestigungselement mit einem Haltebereich zur Niederhaltung eines elektronischen Moduls, wie Platine, insbesondere einer mit LEDs bestückten Platine, auf einem Leuchtenträger und einem Befestigungsbereich zur seiner Gegenlagerung an dem Leuchtenträger, wobei der Befestigungsbereich zur Gegenlagerung an dem Leuchtenträger einen Fuß mit einem zwei Spreizelemente umfassenden Spreizpaar aufweist und die Spreizelemente zur Verrastung in oder an einer vorgesehenen Befestigungsausnehmung des Leuchtenträger senkrecht oder etwa senkrecht zu einer vorgesehenen Einsetzrichtung des Befestigungselementes in den Leuchtenträger unter Ausbildung einer Federvorspannung gegenläufig zueinander federelastisch auslenkbar ausgebildet sind. Die Erfindung betrifft ferner ein Befestigungssystem mit dem Befestigungselement.

Ein derartiges Befestigungselement und Befestigungssystem mit dem Befestigungselement sind bekannt.

Es wird in DE 20 2012 001835 U1 ein gattungsgemäßes Befestigungselement beschrieben, dessen Spreizpaar als federelastische Rasthaken ausgebildet sind, die unter Durchgriff durch die Befestigungsöffnung und begleitet von einem federelastischen Niederdrücken des als Platine ausgebildeten Moduls an dem Leuchtenbauteil verrasten.

EP 2 138 757 A1 beschreibt eine Leuchte mit mehreren nicht gattungsgemäßen Befestigungselementen, die als Modul einen Leuchteneinsatz in Position halten, wobei ein vorgesehenes Halteteil der Befestigungselemente zwischen einer Befestigungsposition, in der der Leuchteneinsatz an einem Leuchtengehäuse gehalten ist, und einer Freigabeposition, in der der Leuchteneinsatz von dem Leuchtengehäuse freigegeben ist, bewegbar sind.

DE 296 23 048 U1 beschreibt ein Befestigungselement zur Befestigung mindestens zweier Bauteile flach aneinander anliegend, wobei in DE 296 23 048 U1 kein Bezug zu einer Leuchte gegeben ist. Zudem ist lediglich eine Verrastung unter Verklammerung der beiden Bauteile 25,26 aneinander vorgesehen.

Beispielsweise wird in der WO2012/096288A1 ein aufwendig gestaltetes mehrteiliges Befestigungselement beschrieben, das mit einem Rasthaken die Befestigungsausnehmung verrastend durchgreift und das eine zusätzliche Feder zum federelastischen Niederhalten des Moduls auf den Leuchtenträger aufweist. Dieses macht auch ein Verfahren, insbesondere ein automatisiertes Verfahren, zum Bestücken eines Leuchtenträgers mit einem elektronischen Modul apparativ und von den notwendigen Verfahrensschritten her aufwendig.

In der DE 10 2009 043 760 A1 wird ein nicht gattungsgemäßes Befestigungssystem beschrieben, bei dem das Befestigungselement zeitaufwendig unter Niederhaltung der Platine mit dem Leuchtenträger verschraubt wird.

Aus DE 10 2012 206695 A1 ist ein Befestigungselement zum Befestigen einer Verkleidung an einer Basisplatte einer Fahrzeugtür bekannt, wobei das Befestigungselement Verkleidung und Basisplatte so miteinander verbindet, dass sie über das Befestigungselement federbeweglich beabstandet zueinander gehalten sind.

Aufgabe der Erfindung ist, ein gattungsgemäßes Befestigungselement und/oder ein Befestigungssystem mit Befestigungselement bereitzustellen, mittels dessen das Modul sicher in oder an der Befestigungsausnehmung festlegbar ist und das einfach aufgebaut bzw. einfach montierbar ist..

Die gestellte Aufgabe wird erfindungsgemäß durch die Merkmale des Anspruches 1 gelöst. Vorteilhafte Weiterbildungen werden in den Unteransprüchen beschrieben. Die gestellte Aufgabe wird bereits dadurch gelöst, dass die Spreizelemente jeweils blattfederartig mit einem freien Ende und die freien Enden der Spreizelemente spitz zulaufend ausgebildet sind, um sich endseitig in die Wandung des Leuchtenträgers eingraben und damit stärker festsetzen zu können, und dass die Spreizelemente und/oder der Fuß mit einer Erstreckungskomponente gegen Einsetzrichtung umgebogen ausgebildet sind.

Die Federelemente können somit mit Einsetzen in die Befestigungsausnehmung innenwandig in der Befestigungsausnehmung unter Federvorspannung anliegen. Damit muss das Befestigungselement zu seiner Lagefixierung lediglich in Einsetzrichtung in die Befestigungsausnehmung eingesetzt werden. Dies kann einhändig ohne Hilfe eines zusätzlichen Werkzeuges erfolgen. Hierbei können die gegenläufig federelastisch verspannten Spreizelemente unter innenwandiger federelastischer Anlage in der Befestigungsausnehmung, unter Eingriff in eine vorgesehene innenseitige Ausnehmung, wie Ringnut, oder in Einsetzrichtung hinter der Befestigungsausnehmung im bestimmten Maße aufspreizen und das Befestigungselement in bzw. an der Befestigungsausnehmung festsetzen.

Die Spreizelemente können vorteilhaft einfach blattfederartig mit einem freien Ende ausgebildet sein. Die freien Enden können zulaufend, bevorzugt spitz zulaufend ausgebildet sein. Damit können sich die Spreizelemente endseitig in die Wandung des Leuchtenträgers, insbesondere in die Innenwandung der Befestigungsausnehmung eingraben und damit stärker festsetzen.

Die Spreizelemente sind bevorzugt so ausgebildet, dass sie sich mit Einsetzen in die Befestigungsausnehmung automatisch gegenläufig federelastisch verspannen. Diese mit dem Einsetzen automatisch erfolgende gegenläufige federelastische Auslenkung der Spreizelemente vereinfacht ein automatisiert erfolgendes Einsetzen der Befestigungselemente in bzw. an den Leuchtenträger zum vorzugsweise automatisierten Bestücken des Leuchtenträgers mit einem elektronischen Modul.

Hierzu können sich die Federelemente gegen Einsetzrichtung und bezüglich einer sich in Einsetzrichtung erstreckenden Mittelachse des Befestigungselementes mit einer Erstreckungskomponenten nach außen von dem Befestigungsbereich weg erstreckend ausgebildet sein. Damit können die Spreizelemente jeweils eine in Einsetzrichtung hintere erste Abgleitfläche aufweisen. Die Ebenennormale der ersten Abgleitfläche kann mit einer Richtungskomponente in Einsetzrichtung und mit einer weiteren Richtungskomponente radial nach außen weisen. An dieser Abgleitfläche können die Spreizelemente beim Einsetzen in die Befestigungsausnehmung in Einsetzrichtung an dem in Einsetzrichtung vorderen die Befestigungsausnehmung begrenzenden Ausnehmungsrand abgleiten und hierdurch federelastisch auslenken. Die Spreizelemente und/oder der Fuß können mit einer Erstreckungskomponente gegen Einsetzrichtung umgebogen ausgebildet sein.

Die beiden Spreizelemente eines Spreizpaares können bezüglich der Mittelachse einander gegenüber liegend angeordnet sein. Die freien Enden können in einem radialen Abstand voneinander beabstandet sein, der größer als der der radial einander gegenüberliegenden Innenwände der Befestigungsausnehmung ist. Damit können die Spreizelemente unter Abgleiten an dem in Einsetzrichtung vorderen Ausnehmungsrand und dadurch erfolgenden automatischen elastischen Auslenkung radial nach innen in dieselbe eingesetzt.

Produktionstechnisch vereinfachend, kann zumindest der die Spreizelemente aufweisende Abschnitt des Befestigungsbereiches bezüglich einer die Einsetzrichtung und eine hierzu senkrechte erste Querrichtung aufweisende Symmetrieebene spiegelsymmetrisch ausgebildet sein.

Der Fuß kann aus einem Federblech gefertigt sein. Er kann einen U-förmigen Querschnitt mit jeweils einem Spreizelement an den Schenkeln bzw. einem Spreizelement als Schenkel ausgebildet sein. In einer bevorzugten Ausbildung des Befestigungselementes kann der Fuß zwei Spreizpaare aufweisen, die vorzugsweise bezüglich der ersten Querrichtung senkrecht zur Einsetzrichtung beabstandet zueinander angeordnet sind. Die Spreizpaare können in erster Querrichtung über einen Mittenabschnitt voneinander beabstandet angeordnet sein. Dieses Mittenstück kann ebenfalls einen U-förmigen Querschnitt aufweisen, wobei dessen Schenkel, innenwandig in insbesondere einer als Langloch ausgebildeten Befestigungsausnehmung anliegend, zur Lagestabilisierung des Befestigungselementes in dieser Befestigungsausnehmung dienen können.

Bevorzugt befinden sich die Spreizelemente und/oder die Spreizpaare bezüglich der Einsetzrichtung axial auf gleicher Höhe.

In einer bevorzugten Ausführungsform des Befestigungselementes kann an dem vom Fuß abgewandten Ende des Befestigungsbereiches eine Aufnahme für den Haltebereich des Befestigungselementes vorgesehen sein. Bei einem U-förmigen Querschnitt des Fußes kann einer der Schenkel endseitig die Aufnahme aufweisen. Dieser Schenkel kann in Einsetzlage des Befestigungselements in der Befestigungsausnehmung aus derselben mit der Aufnahme herausragend angeordnet sein.

Die Aufnahme kann ein einen Ausnahmeraum begrenzendes Klauenpaar aufweisen. Die Klauen des Klauenpaares können mit ihren freien Enden senkrecht zur Einsetzrichtung von dem Befestigungsbereich erstreckend angeordnet sein. Zum Einschieben des Haltebereiches seitlich in die Aufnahme können die Klauen federelastisch von einander weg aufbiegbar ausgebildet sein. Vorzugsweise sind die Klauen endseitig über einen Schlitz voneinander beabstandet angeordnet. Damit kann mit Aufbiegen der Klauen federelastisch von einander eine Schlitzaufweitung auftreten. Dies erleichtert das Einschieben des Halteelements seitlich in die Aufnahme hinein. Kraftmechanisch günstig können die den Schlitz begrenzenden Schlitzränder in einer Einschiebrichtung vorn jeweils eine zweite Aufgleitschräge aufweisen, über die die Aufweitung des Schlitzes mit Einschieben des Halteelementes in die Aufnahme erleichtert wird.

Bevorzugt ist das Befestigungselement zur Verwendung beim Einbau von elektronischen Modulen vormontiert. Hierzu sind Befestigungsbereich und Haltebereich miteinander verbunden angeordnet. Das elektronische Modul kann allein oder zusätzlich zu der Platine optische Elemente, wie Blende, Linse, Lichtleiter und/oder transparente Abdeckung, aufweisen, die vorzugsweise zueinander bzw. zur Platine lose bleibend angeordnet sind und durch die Befestigungselemente gegen den Leuchtenträger gehalten werden können.

Der Haltebereich kann einen sich einseitig oder doppelseitig quer zur Einsetzrichtung vorkragenden Haltearm zur in Einsetzrichtung vorderseitigen Anlage an dem Modul, insbesondere der Platine, aufweisen. Mit dem einseitig vorkragenden Haltearm kann eine Platine und mit dem beidseitig vorkragenden Haltearm können zwei über das Befestigungselement von einander beabstandete Platinen gleichzeitig gegen den Leuchtenträger niedergehalten werden.

Der Haltebereich mit dem Haltearm kann relativ zum Befestigungsbereich zwischen einer Offenposition und einer Halteposition verdrehbar in der Aufnahme gelagert angeordnet sein. Hierbei kann in der Offenposition das elektronische Modul, insbesondere die Platine, von dem Befestigungselement freigegeben sein. Ferner kann in der Halteposition des Haltebereichs das elektronische Modul, insbesondere der Platine, gegen den Leuchtenträger gehalten angeordnet sein. Hierbei kann der Haltearm über das elektronische Bauteil verschwenkt angeordnet sein.

Der Haltebereich und der Befestigungsbereich in der Offenposition und/oder in der Halteposition aneinander verrastbar sein. Es kann ein Verrasten des Haltebereichs vorzugsweise in der Aufnahme mit Verdrehen des Haltebereiches in der Halteposition und/oder in der Offenposition hinein erfolgen. Hierzu kommen beliebige Verrastungsformen in Betracht.

Vorzugsweise sind Offenposition und Halteposition bezüglich der Mittellinie des Befestigungselementes in einem Drehwinkel von 90° voneinander beabstandet. Der Drehwinkel kann auch bis zu 95° und mehr betragen. Er kann um bis zu 5° oder mehr vermindert sein. Insbesondere weist der Haltearm in der Offenposition in die erste Querrichtung und in der Halteposition in die zweite Querrichtung.

Vorteilhaft kann eine Ausführungsform des Befestigungselements zwischen Aufnahme und Fuß ein bezüglich der Einsetzrichtung federwirksamer Federbereich vorgesehen sein. Über diesen Federbereich kann eine bezüglich der Einsetzrichtung axiale Federvorspannung erzeugt werden, mittels derer in Arbeitslage des Befestigungselementes eine Andrückkraft zum Niederhalten des elektronischen Bauteils gegen den Leuchtenträger ausgeübt wird.

Der Haltearm kann unterhalb seines vorkragenden Endes eine dritte Aufgleitschräge zum leichteren Drehverschieben des Haltearms auf das elektronische Bauteil aufweisen. An der dritten Aufgleitschräge kann der Haltearm aus der Offenposition in die Schließposition hinein an der Platine angehoben werden. Damit kann mit dem Drehverschwenken des Haltearms über die Aufgleitschräge in dem Federbereich zumindest ein Teil der axialen Federvorspannung erzeugt werden.

Die Herstellung vereinfachend, kann der gesamte Befestigungsbereich einstückig, insbesondere aus einem Federblech gefertigt sein. Der Federbereich kann durch eine U-förmige Verformung oder Schlaufenbildung des Federbleches quer zur Einsetzrichtung gekennzeichnet sein.

Desgleichen kann der Haltebereich einstückig ausgebildet sein. Er kann aus Kunststoff, vorzugsweise als Spritzgussteil gefertigt sein. Der Befestigungsbereich kann aus einem Werkstoff, beispielsweise aus einem Kunststoff, insbesondere aus einem für einen Lichtleiter geeigneten, transparenten, insbesondere gefärbten Kunststoff, wie Polycarbonat, gefertigt sein.

Alternativ kann ein Befestigungssystem zur Befestigung eines elektronischen Moduls, wie Platine, auf einem Leuchtenträger, mit einem Befestigungselement gemäß einer der zuvor und nachfolgend beschriebenen Ausführungsformen mit dem den Fuß aufweisenden Befestigungsbereich und dem Haltebereich zur Niederhaltung des elektronischen Moduls, wie Platine, gegen den Leuchtenträger vorgesehen sein. Das Befestigungssystem kann zudem eine an dem Leuchtenträger vorgesehene Befestigungsausnehmung, in der das Befestigungselement zur Gegenlagerung mit seinem Fuß in Einsetzrichtung lageunveränderlich einsetzbar ist, aufweisen. Hierzu kann das Spreizpaar in Einsetzlage des Befestigungselementes in der Befestigungsausnehmung federelastisch innenwandig verspannend angeordnet sein. Es kann das Spreizpaar auch die Befestigungsausnehmung durchgreifend und, unter Niederhaltung des elektronischen Moduls in Einsetzrichtung mittels des Haltebereichs, gegen Einsetzrichtung formschlüssig an einem die Befestigungsausnehmung in Einsetzrichtung hinten begrenzenden Ausnehmungsrand anliegend angeordnet sein.

Die Befestigungsausnehmung kann als Nut oder Langloch ausgebildet sein. Sie kann in unmittelbarer Nähe einer am Leuchtenträger vorgesehenen Modulaufnahme für das elektronische Modul, wie Platine, angeordnet sein. Sie kann diese Modulaufnahme seitlich begrenzen. Die Befestigungsausnehmung kann auch zwischen zwei Modulaufnahmen für jeweils ein elektronisches Modul angeordnet sein, so dass ein in dieser Modulaufnahme festgelegtes Befestigungselement wahlweise zur Niederhaltung eines Moduls oder zur gleichzeitigen Niederhaltung beider Module eingesetzt werden kann.

Alternativ kann ein Verfahren zum automatisierten Bestücken eines Leuchtenträges mit einem elektronischen Modul, wie Platine, insbesondere einer mit LEDs bestückten Platine, mittels eines Bestückungsautomaten und eines Befestigungssystems gemäß einer der zuvor und nachfolgend beschriebenen Ausführungsformen mit einem Befestigungselement gemäß einer der zuvor und nachfolgend beschriebenen Ausführungsformen bereitgestellt werden. Hierbei kann der Bestückungsautomat eine Einsetzvorrichtung mit einer relativ zu einer Auflage für den Leuchtenträger bewegbaren Halterung für das einzusetzende Befestigungselement und einen Spender für die Befestigungselemente aufweisen. Das Verfahren kann, nach Einrichten des Bestückungsautomaten, folgende Verfahrensschritten aufweisen:
- Absenken der Halterung und Einsetzen des in der Halterung befindlichen Befestigungselementes in Einsetzrichtung in die Befestigungsausnehmung in eine Einsetzposition hinein, in der das Befestigungselement mit seinem Haltebereich oder einem anderen vorgesehenen Anschlag in Einsetzrichtung vorn an dem Leuchtenträger oder der Platine anliegt und mit seinem Fuß in oder in Einsetzrichtung hinten an der Befestigungsausnehmung gegengelagert ist und
- Lösen des Befestigungselementes aus der Halterung.

Anschließend kann eine Neubestückung der Halterung mit einem einzusetzenden Befestigungselement erfolgen.

Die Halterung kann vor dem Absenken und Einsetzen des Befestigungselementes zur Aufnahme des Befestigungselementes aus dem Spender zu demselben hin und/oder zu einem bestimmten Ort des Leuchtenträgers mit Befestigungsausnehmung relativ zu dem Leuchtenträger verfahren werden. Vorzugsweise ist der Spender bezüglich der in ihm bevorrateten Befestigungselemente transportwirksam mit der Halterung verbunden. Damit kann mit dem Lösen der Halterung von dem in die Befestigungsausnehmung vorzugsweise automatisch ein Neuladen der Halterung mit einem Befestigungselement aus dem Spender erfolgen.

Das Einsetzen des Befestigungselements in die Einsetzposition hinein kann so erfolgen, dass das Befestigungselement zugleich in die Halteposition gebracht wird, in der das Befestigungselement das elektronische Modul gegen den Leuchtenträger niederhält. Dies ist insbesondere dann sinnvoll, wenn das elektronische Modul vor dem Bestücken des Leuchtenträgers mit den Befestigungselementen bereits ordnungsgemäß auf dem Leuchtenträger positioniert worden ist.

Nicht nur, aber insbesondere dann, wenn der Leuchtenträger vor Positionierung des elektronischen Moduls bzw. der elektronischen Module auf dem Leuchtenträger mit den Befestigungselementen bestückt werden soll, ist sinnvoll, dass die Befestigungselemente mit Einsetzen in die Einsetzposition hinein zugleich jeweils in die Offenposition gebracht werden. Damit können die elektronischen Module nachfolgend ungehindert durch die Befestigungselemente auf dem Leuchtenträger positioniert werden.

Nachfolgend zum Einsetzen der Befestigungselemente in Offenposition und eventuell nachfolgend der Positionierung der elektronischen Module kann als weiterer Verfahrensschritt ein Verdrehen der eingesetzten Befestigungselemente in ihre jeweilige Halteposition hinein erfolgen. Hierzu kann, wie bereits oben beschrieben, bei einer Ausführungsform des Befestigungselementes mit Haltearm das Befestigungselement aus der Offenposition mit seinem Haltearm andruckwirksam über das zugeordnete elektronische Modul in die Halteposition hinein gebracht werden. In der Halteposition liegt der Haltebereich vorzugsweise unter Federvorspannung an dem elektronischen Modul an.

Das Verdrehen der Befestigungselemente kann manuell erfolgen. Bevorzugt erfolgt dieses automatisiert, indem beispielsweise die Halterung oder ein an oder nahe der Halterung vorgesehenes Werkzeug bezüglich der Einsetzrichtung drehmomentwirksam in Einsetzrichtung vorn vorzugsweise an dem Haltebereich angreift und in die Halteposition hinein verdreht, in der der Haltearm formschlüssig in Einsetzrichtung vorn an dem Modul angreift.

Die Halterung kann in einem Arbeitskopf integriert sein, in dem zugleich das vorgesehene Werkzeug angeordnet sein kann, das mit Lösen der Halterung von dem eingesetzten Befestigungselement in eine Arbeitsposition zu dem eingesetzten Befestigungselement gebracht wird. Der Arbeitskopf kann endseitig an einem vorgesehenen Industrierobotterarm angeordnet sein. Der Arbeitskopf kann zudem den Spender aufweisen oder mit demselben transportwirksam verbunden sein.

Die vorliegende Erfindung wird im Folgenden anhand mehrerer in einer Zeichnung dargestellten Ausführungsformen des Befestigungselements bzw. des Befestigungssystems näher erläutert. In der Zeichnung zeigen:
- Fig. 1: eine perspektivische Draufsicht auf eine erste Ausführungsform eines Befestigungselements,
- Figuren 2a und 2b: jeweils eine Seitenansicht des Befestigungselements gemäß Figur 1,
- Fig. 3a bis 3c: jeweils eine perspektivische Draufsicht auf eine weitere Ausführungsform des Befestigungselements,
- Fig. 4: eine perspektivische Draufsicht auf eine erste Ausführungsform eines Befestigungssystems zur Befestigung eines elektronischen Moduls auf einen Leuchtenträger mittels hier mehreren Befestigungselementen gemäß Figur 3c,
- Fig. 5: eine perspektivische Draufsicht auf die erste Ausführungsform des Befestigungssystems gemäß Figur 4, jedoch mit einer anderen Ausführungsform des elektronischen Moduls,
- Fig. 6: eine Ausschnittsvergrößerung VI aus Figur 5,
- Figuren 7a und 7b: jeweils eine perspektivische Draufsicht auf eine zweite Ausführungsform des Befestigungssystems
- Fig. 8: eine Seitenansicht einer weiteren Ausführungsform des Befestigungselementes,
- Fig. 9: eine Schnittansicht gemäß dem Schnittverlauf IX-IX in Figur 8 und
- Figuren 10a und 10e: jeweils eine perspektivische Draufsicht auf die wesentlichen Komponenten beim Einsetzen von Befestigungselementen in einen Leuchtenträger in einer Abfolge von fünf Verfahrensschritten.

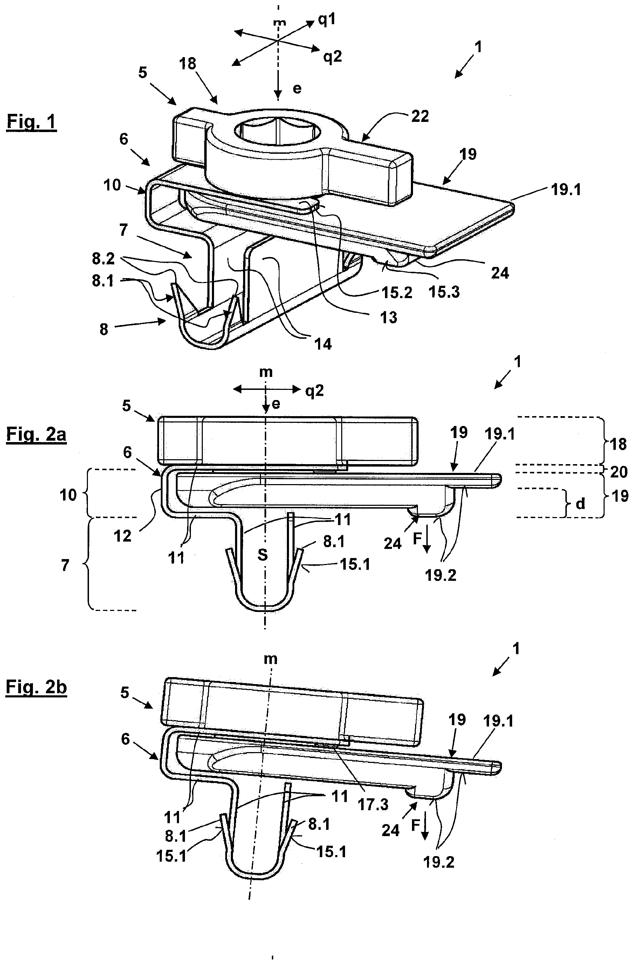

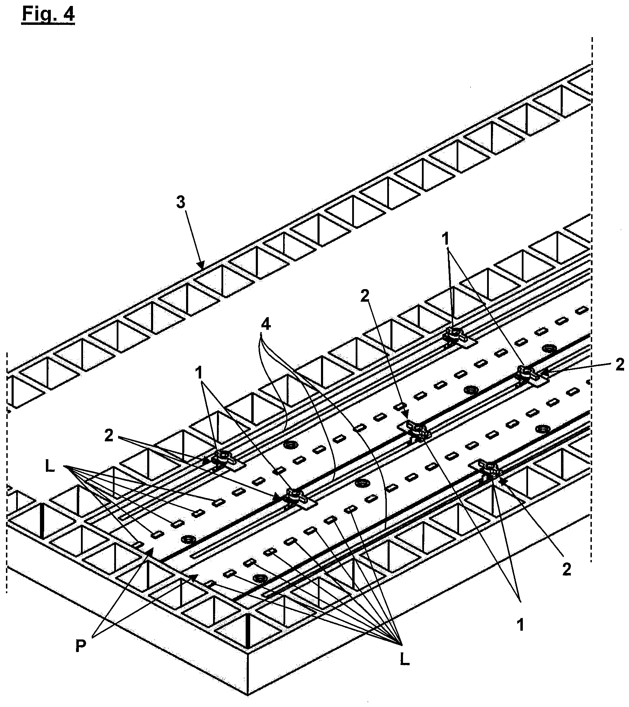

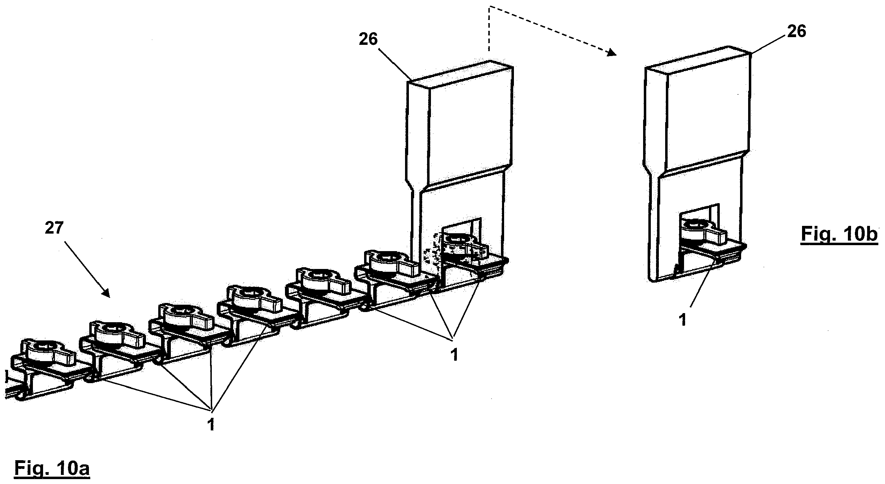

In den Figuren 1 bis 3 werden, jeweils in einer perspektivischen Draufsicht, verschiedene Ausführungsformen eines Befestigungselements 1 gezeigt. Die Figuren 4 bis 7 zeigen perspektivische Draufsichten von unterschiedlichen Ausführungsformen eines Befestigungssystems 2 mit Befestigungselementen 1. Unter zur Hilfenahme der Figuren 10a bis 10e wird in einer Abfolge von fünf Verfahrensschritten ein automatisiertes Verfahren zum Einsetzen von Befestigungselementen 1 in an einem Leuchtenträger 3 vorgesehenen Befestigungsausnehmungen 4 erläutert.

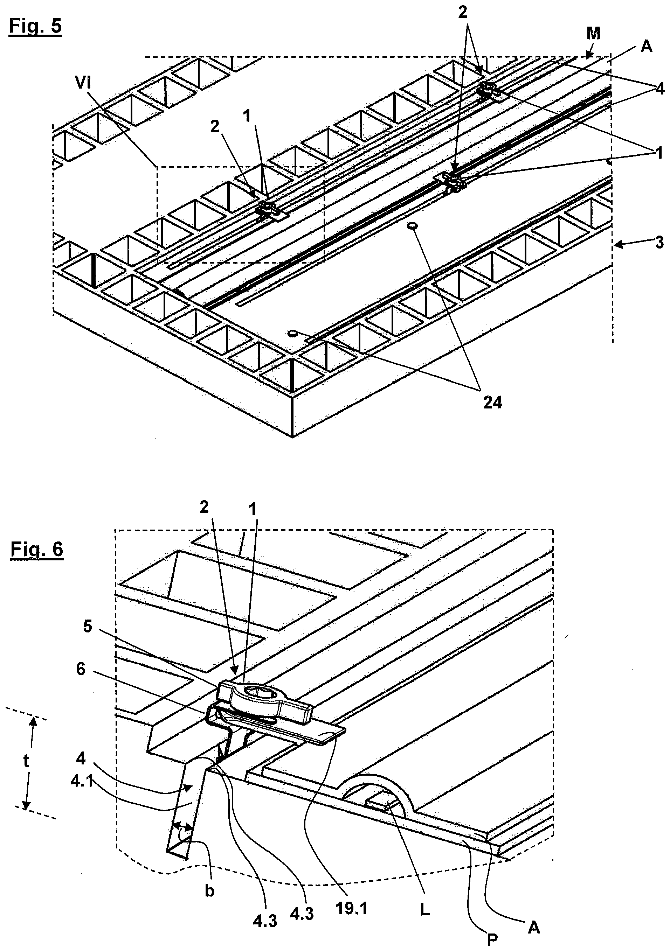

Das Befestigungselement 1 weist einen Haltebereich 2 zur Niederhaltung eines in den Figuren 5 bis 8 gezeigten elektronischen Moduls M auf dem Leuchtenträger 3 und einen Befestigungsbereich 6 zu seiner Gegenlagerung an dem Leuchtenträger 3 auf. Der Befestigungsbereich 6 weist zur Gegenlagerung des Befestigungselementes 1 an dem Leuchtenträger 3 einen Fuß 7 mit einem Spreizpaar 8 auf, wobei das Spreizpaar 8 zwei kraftwirksam gegeneinander verspannbare Spreizelemente 8.1 umfasst. Die Spreizelemente 8.1 sind senkrecht zu einer vorgesehenen Einsetzrichtung e des Befestigungselementes 1 in die Befestigungsausnehmung 4 des Leuchtenträgers 3 federelastisch gegeneinander auslenkbar ausgebildet.

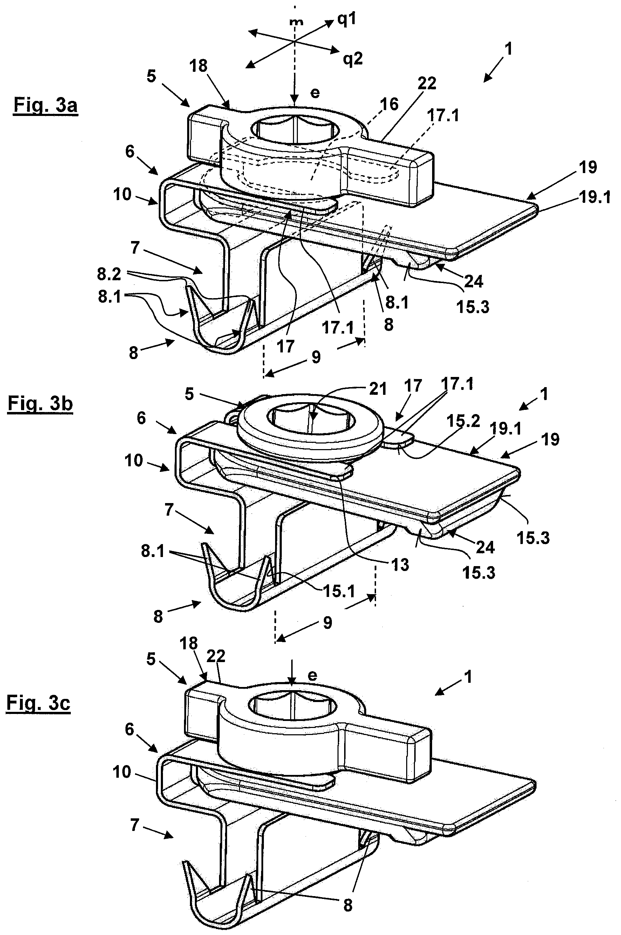

Wie insbesondere Figur 3a deutlich entnehmbar, sind hier zwei Spreizpaare 8 vorgesehen, die bezüglich einer ersten Querrichtung q1 voneinander beabstandet und bezüglich der Einsetzrichtung e in gleicher Höhe angeordnet sind. Die Spreizelemente 8.1 eines jeden Spreizpaares 8 sind bezüglich Spiegelsymmetrieebene S, die erste Querrichtung q1 und die Einsetzrichtung e enthält, symmetrisch einander gegenüberliegend angeordnet.

Der Befestigungsbereich 6 ist hier einstückig aus einem Federblech gefertigt. Hierbei ist der Fuß 7 des Befestigungsbereichs 6 spiegelsymmetrisch zu der Spiegelsymmetrieebene S so unter Ausbildung eines U-förmigen Querschnitts 11 mit zwei Schenkeln um 180 Grad umgebogen, dass er endseitig mit einem Schenkel 11 gegen Einsetzrichtung e weist. Der Fuß 7 weist eine Längserstreckung in erster Querrichtung q1 auf, wobei die beiden Spreizpaare 8 des Fußes 7 über einen Mittelteil 9 voneinander beabstandet sind.

An den Fuß 7 anschließend, ist ein in Einsetzrichtung e federwirksamer Federbereich 10 vorgesehen, der ebenfalls einen U-förmigen Querschnitt mit zwei Schenkeln 11 aufweist. Hierbei laufen die beiden Schenkel 11 in unbelasteter Lage des Befestigungselementes 1 konisch zusammen, wie es in Figur 2b gezeigt ist. Insbesondere ist der in Figur 2b obere Schenkel 11 in einem Winkel β kleiner 90 Grad zu dem Quersteg 12 im U-förmigen Querschnitt des Federbereichs 10 angeordnet. Der hier obere Schenkel 11 erstreckt sich in zweiter Querrichtung q2 über den Fuß 7 hinaus. Er weist eine Aufnahme 13 für den Haltebereich 5 auf.

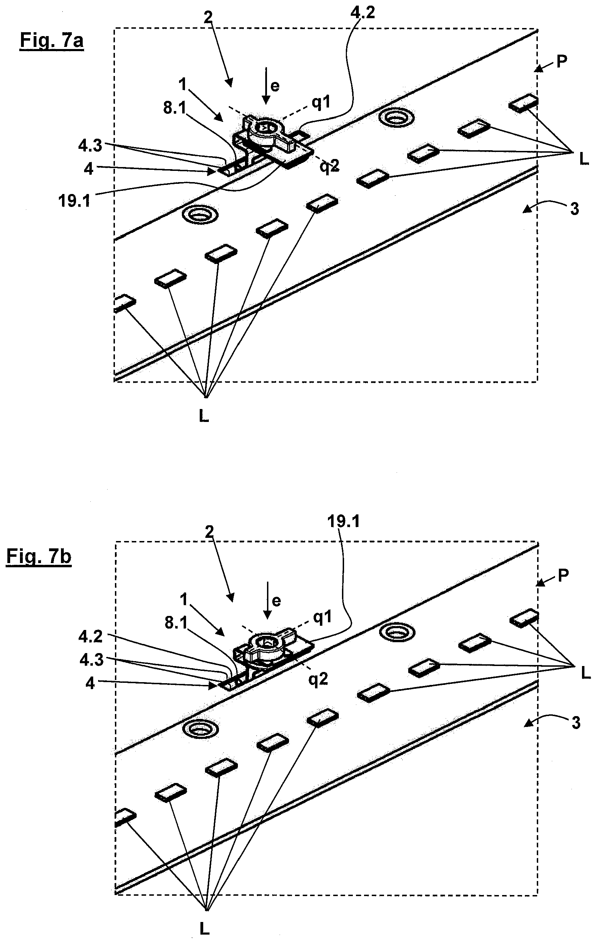

Wie insbesondere in den Figuren 2a und 2b eindeutig entnehmbar, erstrecken sich die Spreizelemente 8.1 jeweils schräg nach oben. Das heißt, die Spreizelemente 8.1 erstrecken sich jeweils bezüglich der Einsetzrichtung e radial nach außen und gegen Einsetzrichtung e. Dadurch ragen sie in zweiter Querrichtung q2 über den Mittelteil 9 hinaus. Unmittelbar einsichtig ist, dass der Mittelteil 9 mit seiner Längserstreckung in erster Querrichtung q1 für eine längliche Befestigungsausnehmung 4 geeignet ist. Diese Befestigungsausnehmung 4 kann, wie beispielsweise in Figur 6 gezeigt, eine in den Leuchtenträger 3 vorgesehene Nut 4.1 oder, wie beispielweise der Figur 7b deutlich entnehmbar, ein Langloch 8.2 sein. Der Mittelteil 9 ist bezüglich seiner Erstreckung in zweiter Querrichtung q2 der Breite b der Befestigungsausnehmung 4 so angepasst, dass der Mittelteil 9 in Einsetzlage des Befestigungselementes 1 mit seinen Seitenwänden 14 in der Befestigungsausnehmung 4 innenseitig an der Befestigungsausnehmung 4 anliegt und dadurch das Befestigungselement 1 in der Befestigungsausnehmung 4 lagestabilisiert.

Dadurch, dass die Spreizelemente 8.1 beider Spreizpaare 8 bezüglich der Einsetzrichtung e radial nach außen in zweiter Querrichtung q2 über die Seitenwände 14 des Mittelteils 9 hinausragen (Figuren 2a und 2b), werden die Spreizelemente 8.1 mit Einsetzen des Befestigungselementes 1 in die Befestigungsausnehmung 4 jeweils unter Abgleiten an dem Öffnungsrand 4.3 der Befestigungsausnehmung 4 bezüglich der Einsetzrichtung e radial nach innen federelastisch gespannt. Infolge dieser Federvorspannung können sie sich innenseitig in der als Nut 4.1 ausgebildeten Befestigungsausnehmung 4 festsetzen und damit das Befestigungselement 1 in der Befestigungsausnehmung 4 lagefixieren. Die Spreizelemente 8.1 laufen am freien Ende 8.2 spitz zu, wodurch sie sich, abhängig von dem Werkstoff des Leuchtenträgers 3, innenwandig in die Befestigungsausnehmung 4 eingraben können. Die Spreizelemente 8.1 weisen jeweils unterseitig eine erste Abgleitfläche 15.1 auf, an der sie an dem Öffnungsrand 4.3 der jeweiligen Befestigungsausnehmung 4 abgleiten können, welches das Einsetzen des Befestigungselementes 1 in die Befestigungsausnehmung erleichtert.

Die Aufnahme 13 in dem Haltebereich 5 des Befestigungselementes 1 weist ein an dem Aufnahmeraum 16 begrenzendes Klauenpaar 17 auf, dessen Klauen 17.1 sich mit ihren freien Enden 17.2 in zweiter Querrichtung q2 erstreckend angeordnet sind und die zur Aufnahme des Haltebereichs 5 in erster Querrichtung q1 voneinander weg federelastisch biegbar ausgebildet sind. Mit Hineinschieben des Haltebereichs 5 in zweiter Querrichtung q2 in die Aufnahme 13 werden somit die Klauen 17.1 in erster Querrichtung q1 federelastisch aufgeweitet, um, wenn der Haltebereich 5 seine vorgeschriebene Aufnahmeposition des Haltebereichs 5 in der Aufnahme 13 erreicht hat, wieder federelastisch zurückzuschwingen. Zum leichteren Aufweiten der Klauen 17.1 durch den Haltebereich 5 ist endseitig derselben jeweils eine zweite Aufgleitfläche 15.2 vorgesehen (Figur 3a).

Der hier einstückig aus Kunststoff hergestellte Haltebereich 5 weist in Einsetzrichtung e vorne ein Betätigungsende 18 und in Einsetzrichtung e hinten ein Halteende 19 mit einem vorkragenden Haltearm 19.1 auf. Zwischen Betätigungsende 18 und Halteende 19 ist ein Ringschlitz 20 vorgesehen, in den beidseitig die Klauen 17.1 seitlich eingreifen. Damit wird der Haltebereich 5 axial verschiebungsfest und bezüglich der Einsetzrichtung e verdrehbar in der Aufnahme 13 gehalten. In dem Betätigungsende 18 ist eine gegen Einsetzrichtung e geöffnete Werkzeugöffnung 21 für einen hier nicht gezeigten Inbusschlüssel zum Verdrehen des Haltebereichs 5 in der Aufnahme 13 um eine Mittelachse m parallel zur Einsetzrichtung e angeordnet. Zusätzlich weist das Befestigungselement gemäß den Figuren 1, 3a und 3c an dem Betätigungsende 18 ein Hebelpaar 22 zum manuellen Verdrehen des Haltebereichs 5 in der Aufnahme 13 auf.

Der Haltebereich 5 ist in der Aufnahme 13 zwischen einer Halteposition (Figuren 1 bis 7a sowie 8 und 9), in der sich der Haltearm 19.1 in zweiter Querrichtung q2 erstreckt, und einer Offenposition (Figur 7b), in der sich der Haltearm 19.1 in erster Querrichtung q1 erstreckt, in der Aufnahme 13 verdrehbar, wobei, was hier nicht eigens dargestellt ist, der Haltebereich 5 in der jeweiligen Position an der Aufnahme 13 verrastet. Es kann der Haltearm 19.1 in der Offenposition gemäß Figur 7b in beiden möglichen Stellungen in und entgegen der ersten Querrichtung q1 weisen.

In den Figuren 4 bis 6 wird die erste Ausführungsform des Befestigungssystems 2 mit Befestigungselement 1 und Befestigungsausnehmung 4 gezeigt, die hier als endseitig begrenzte Nut in den Leuchtenträger 3 eingelassen ist. Der Leuchtenträger 3 ist hier aus Aluminium gefertigt und dient zugleich als Kühlelement. Zwischen den hier drei Nuten 4.1 sind zwei Modulaufnahmen 23 mit jeweils einer mit LEDs L bestückte Platine P als Modul M angeordnet. Wie in Figur 4 wird anhand der in der mittleren Nut 4.1 angeordneten Befestigungselemente 1 gezeigt, dass die Befestigungselemente 1 wahlweise so anordenbar sind, dass sie in der Halteposition mit ihrem Haltearm 19.1 wahlweise über die hier linke Platine P oder hier rechte Platine P ragen und dieselbe gegen den Leuchtenträger 3 niederhalten. Wie aus Figur 6 entnehmbar, wird das Befestigungselement 1 so eingesetzt, dass es mit dem hier unteren Schenkel 11 seines Federbereichs 10 seitlich der Nut 4.1 auf dem Leuchtenträger 3 anliegt.

Figur 2b zeigt das Befestigungselement in unverspannter Lage. Mit Aufsetzen des unteren Schenkels 11 wird gleichzeitig der obere Schenkel 11 des Federbereichs 10 durch endseitige Auflagerung des Haltearms 19.1 auf dem Modul M angehoben, wodurch der Federbereich 10 federelastisch gespannt wird. Hierdurch wird eine definierte Federkraft F auf das Modul M zum Niederhalten desselben gegen den Leuchtenträger 3 ausgeübt. Zur definierten Anlage des Haltearms 19.1 oberseitig auf dem Modul M und in Einsetzrichtung e hinten ist ein quer verlaufender Vorsprung 24 vorgesehen. Mit dem federelastischen Anheben des oberen Schenkels 11 des Federbereiches 10 wird zugleich eine Kraft etwa gleich der Federkraft F gegen Einsetzrichtung e auf die innenwandig in der Nut 4.1 federelastisch anliegenden Spreizelemente 8.1 ausgeübt, wodurch sich diese gegen Einsetzrichtung e in die jeweilige Innenwand der Nut 4.1 eingraben. Wie weit hier ein Eingraben erfolgt, ist insbesondere von der Werkstoffpaarung des Spreizpaars 8/Nutinnenwand und der Kraft abhängig, mit der die Spreizelemente 8.1 in der Nut 4.1 innenwandig anliegen.

Wie insbesondere Figur 6 deutlich entnehmbar, weist hier das Modul M zusätzlich zu der hier unten liegenden Platine P eine transparente Abdeckung A hier aus einem Lichtleiterwerkstoff aus Polymethylmethacrylat (PMMA) auf, die zum Schutz der LEDs L, zur Streuung und Lichtleitung des LED-Lichts sowie zur ästhetischen Ausgestaltung der hier nicht weiter dargestellten Leuchte dient. Ebenfalls, hier aus vornehmlich ästhetischen Gründen, ist der Haltebereich 5 des in Figur 3a gezeigten Befestigungselementes aus einem transparenten Werkstoff gefertigt.

Zum Niederhalten dieses zweiteiligen Moduls M aus Platine P und Abdeckung A ist der Haltearm 19.1 des Halteendes 19 in Höhe der Abdeckung A verlängert, so dass in zwei in Einsetzrichtung e beabstandet und zueinander parallele Anlageflächen 19.1 zur oberseitigen Anlage an der Abdeckung A bzw. an der Platine P ausgebildet sind. Die Größe der Beabstandung ist gleich der Dicke d der Abdeckung A. Infolge der stufigen Anordnung der Anlageflächen 19.1 wird die Abdeckung A zudem seitlich gehalten.

In den Figuren 7a und 7b ist eine zweite Ausbildungsform des Befestigungssystems 2 mit Befestigungselement 1 und einer als Langloch 4.2 ausgebildeten Befestigungsausnehmung 4 in dem Leuchtenträger 3 gezeigt, wobei der Leuchtenträger 3 hier aus einem Leuchtenblech gefertigt ist. Abweichend zu der zuvor beschriebenen Ausführungsform des Befestigungssystems 2 mit der als Nut 4.1 ausgebildeten Befestigungsausnehmung 4, durchgreift der Fuß 7 mit den Spreizpaaren 8 das Langloch 4.2 in Einsetzrichtung e dergestalt, dass die Spreizelemente 8.1, die mit dem Durchgreifen durch das Langloch 4.2 gegeneinander vorgespannt werden, in Einsetzrichtung e hinter dem Langloch 4.2 federelastisch entspannen und, mit oben beschriebener federelastischer Anlage des Haltearms 19.1 an der Platine P, gegen Einsetzrichtung e unterseitig seitlich des Langloches 4.2 anliegen. Auch hier wird durch die endseitige Zuspitzung der Spreizelemente 8.1 eine verbesserte Lagefixierung des Befestigungselementes 1 in der Befestigungsausnehmung 4 erzielt. Figur 7b gibt das Befestigungselement 1 in seiner Offenposition wieder, in der der Haltearm 19.1 in erster Querrichtung q1 und damit parallel zur Platine P weist. Wie oben beschrieben, kann der Haltearm 19.1 aus der Offenposition in die Anlageposition gemäß Figur 7a über die Platine P verschwenkt werden, wobei zum störungsfreieren Verschwenken auf die Platine P in Einsetzrichtung e hinten, d. h. unterhalb des Haltearms 19.1 an dem Vorsprung 24 dritte Aufgleitflächen 15.3 vorgesehen sind.

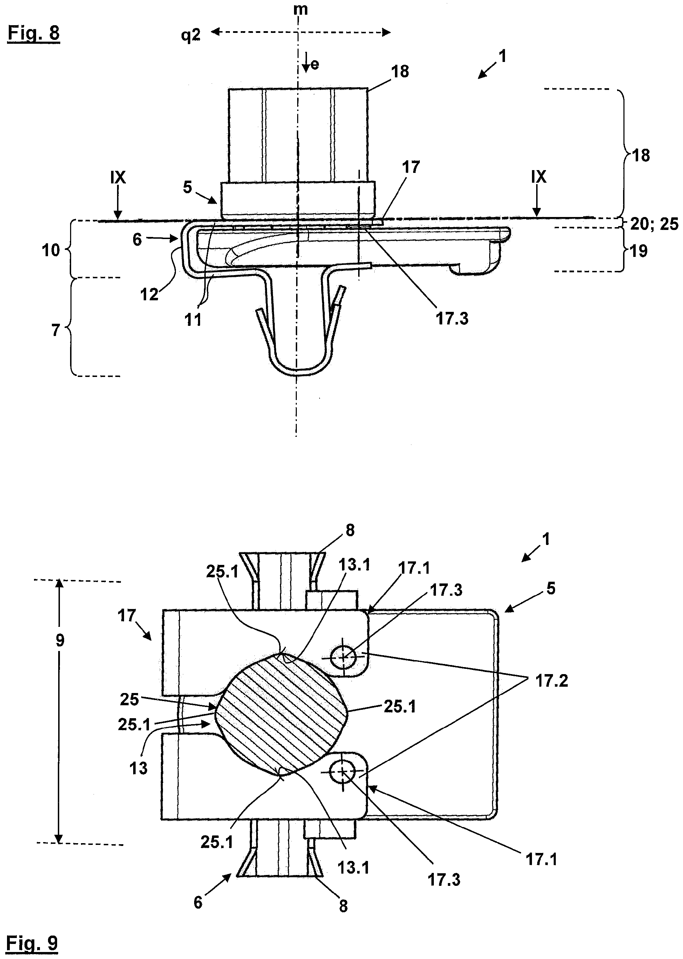

Der Haltebereich 5 und der Befestigungsbereich 6 sind in den hier gezeigten Ausführungsformen des Befestigungselementes 1 in der Offenposition und/oder in der Halteposition aneinander verrastbar. Die Form der Verrastung wird im Folgenden unter Zuhilfenahme der Figuren 8 und 9 gezeigt. In den Figuren wird eine weitere Ausführungsform des Befestigungselementes 1 in einer Seitenansicht bzw. in einer Schnittansicht gemäß dem Schnittverlauf IX-IX in Figur 8 gezeigt, die sich lediglich durch ein gegen Einführrichtung e verlängertes Betätigungsende 18 gegenüber der Ausführungsform gemäß Figur 3b unterscheidet.

Der Schnittverlauf IX-IX verläuft in Einsetzrichtung e am Beginn des Spaltes 20 und parallel zu diesem. In Höhe des Spaltes 20 ist der Haltebereich 5 zu einem Halsabschnitt 25 verengt, dessen Außenkontur gleich der Innenkontur der Aufnahme 13 ist (Figur 9), wobei die Aufnahme 13 durch das Klauenpaar 17 mit den in erster Querrichtung q1 voneinander beabstandeten Klauen 17.1 seitlich begrenzt wird. Der Halsabschnitt 25 weist bezüglich der Einsetzrichtung e einen vierrunden Querschnitt mit entsprechend vier paarweise einander gegenüber liegenden abgerundeten Ecken 25.1 auf, die jeweils umfänglich zur Einsetzrichtung um 90° von den jeweils benachbarten Ecken 25.1 beabstandet sind. Die Innenkontur der Aufnahme 13 weist passgenau zu den Ecken 25.1 gleiche Innenecken 13.1 auf, die, in erster Querrichtung q1 voneinander beabstandet, in das Klauenpaar 17 eingearbeitet sind. Dadurch ergeben sich bezüglich einer Relativbewegung von Haltebereich 5 und der Befestigungsbereich 6 um die Mittelachse m zwei mechanisch stabile Rastpositionen, von denen eine gleich der Offenposition und die andere gleich der in Figuren 8 und 9 gezeigten Halteposition sind. Das Klauenpaar 17 ist so aus dem hier oberen Schenkel 11 des Federbereichs 10 des Befestigungsbereichs 6 geschnitten, dass sich das Klauenpaar 17 mit einer Verdrehung des Halteanschnitts 25 aus einer der beiden stabilen Lage heraus in erster Querrichtung q1 federelastisch aufweiten kann, um bei weiterer Verdrehung in die andere stabile Lage hinein unter Federentspannung formschlüssig an dem vierrunden Querschnitt des Halsabschnitts 25 zu verrasten. Es kann ein Verrasten des Haltebereichs 5 in der Aufnahme 13 mit Verdrehen des Haltebereiches 5 in der Halteposition und/oder in der Offenposition hinein erfolgen.

Symmetrisch zur zweiten Querrichtung q2 ist in den Enden 17.2 der Klauen 17.1 jeweils eine sich in Einsetzrichtung e erstreckende Ausstülpung 17.3 eingebracht, die im Zusammenbau von Haltebereich 5 und Befestigungsbereich 6 in Einsetzrichtung e vorn auf dem Haltearm 19.1 anliegt und somit die relative Lage zwischen Haltebereich 5 und Befestigungsbereich 6 gegen ein Abkippen stabilisiert.

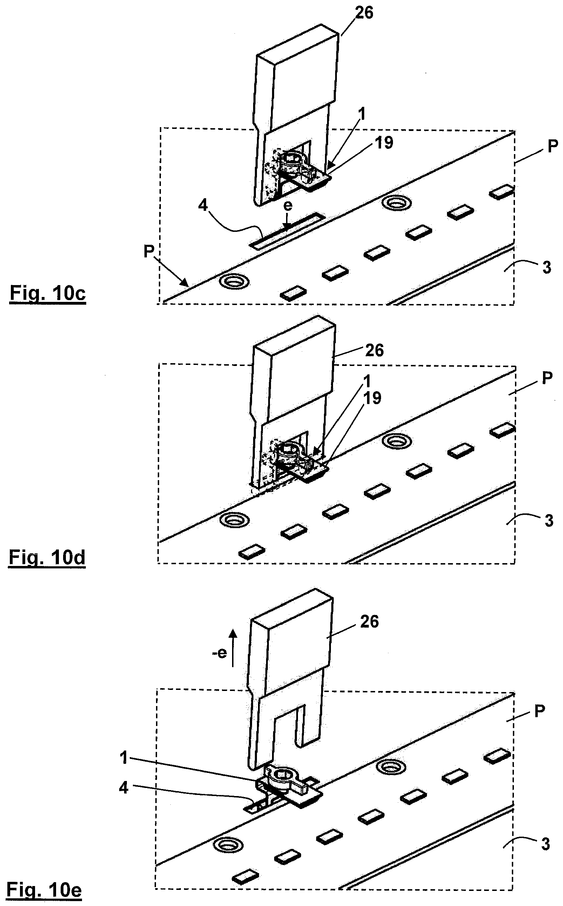

In den Figuren 10a bis 10e wird eine Möglichkeit eines automatisierten Verfahrens gezeigt, gemäß dem Befestigungselement 1, hier vorzugsweise computergesteuert, jeweils in eine zugeordnete Befestigungsausnehmung 4 eines Leuchtenträgers 3 eingesetzt werden können. Hierbei ist die Illustration in Figur 10 zur besseren Übersicht auf das Notwendigste begrenzt. In Figur 10a wird gezeigt, wie eine relativ zu einer hier nicht gezeigten Auflage für den Leuchtenträger 4 bewegbare Halterung 25 einer ansonsten nicht weiter dargestellten Einsetzrichtung eines Bestückungsautomaten ein Befestigungselement 1 aus einem Spender 26 ergreift, wobei der Spender 26 in Form von aufgereihten weiteren Befestigungselementen 1 symbolisiert ist. Die Halterung 25 wird relativ zu der hier nicht gezeigten Auflage über ein Verfahren (Figur 10b) und über eine vorgesehene Befestigungsausnehmung 4 positioniert und abgesenkt (Figur 10c) und zwar so weit, dass das Befestigungselement 1 in vorgeschriebener Lage mit seinem Fuß 7 die Befestigungsausnehmung 4 hier durchgreift und gleichzeitig in Halteposition mit seinem Haltearm 19.9 federelastisch oberseitig der Platine P anliegt (Figur 10d). Hierbei entspannen, wie oben beschrieben, die Klauen 17.1 der Klauenpaare 17 in Einsetzrichtung e hinter der hier als Langloch 4.2 ausgebildeten Befestigungsausnehmung 4. Dieses federelastische Entspannen der Spreizelemente 8.1 ist, wie eigene Versuche belegen, mit einem deutlichen "Klick-Geräusch" verbunden, welches zugleich als Signal dafür dienen kann, dass eine vorschriftsgemäße Positionierung des Befestigungselementes 1 in der Befestigungsausnehmung 4 erreicht ist. Dieses Signal kann gleichzeitig zur Steuerung des Bestückungsautomaten verwandt werden. Bei einer alternativen Ausbildung der Befestigungsausnehmung 4 als Nut 4.1 gemäß Figur 6 verspannen sich Spreizelemente 8.1 seitlich in der Nut 4.1.

Die Halterung 25 ist hier gabelförmig ausgebildet und so dimensioniert, dass sie das jeweilige Befestigungselement 1 lose bleibend unter Klemmspannung halten und verfahren kann. Mit Abheben der Halterung 25 kann diese gegen Einsetzrichtung e von dem in der Befestigungsausnehmung 4 verankerten Befestigungselement abgestreift werden. Anschließend kann die Halterung 25 zum Ergreifen eines weiteren Befestigungselementes 1 wieder zurück zu dem Spender 26 zurück verfahren werden.

### Bezugszeichenliste

- 1: Befestigungselement
- 2: Befestigungssystem
- 3: Leuchtenträger
- 4: Befestigungsausnehmung
- 4.1: Nut
- 4.2: Langloch
- 4.3: Öffnungsrand
- 5: Haltebereich
- 6: Befestigungsbereich
- 7: Fuß
- 8: Spreizpaar
- 8.1: Spreizelement
- 8.2: Ende
- 9: Mittelteil
- 10: Federbereich
- 11: Schenkel
- 12: Quersteg
- 13: Aufnahme
- 13.1: Innenecke
- 14: Seitenwand
- 15.1: erste Aufgleitfläche
- 15.2: zweite Aufgleitfläche
- 15.3: dritte Aufgleitfläche
- 16: Aufnahmeraum
- 17: Klauenpaar
- 17.1: Klaue
- 17.2: Ende
- 17.3: Ausstülpung
- 18: Betätigungsende
- 19: Halteende
- 19.1: Haltearm
- 19.2: Anlagefläche
- 20: Ringschlitz
- 21: Werkzeugöffnung
- 22: Hebelpaar
- 23: Modulaufnahme
- 24: Vorsprung
- 25: Halsabschnitt
- 25.1: Ecke
- 26: Halterung
- 27: Spender
- ß: Winkel
- b: Breite
- d: Dicke
- e: Einsetzrichtung
- m: Mittelachse
- q1: erste Querrichtung
- q2: zweite Querrichtung
- t: Tiefe
- A: Abdeckung
- F: Federkraft
- M: Modul
- L: LED
- P: Platine
- S: Spiegelsymmetrieebene

## Patentansprüche

1. Befestigungselement (1) mit einem Haltebereich (5) zur Niederhaltung eines elektronischen Moduls (M), wie Platine (P), insbesondere einer mit LEDs (L) bestückten Platine (P), auf einem Leuchtenträger (3) und einem Befestigungsbereich (6) zu seiner Gegenlagerung an dem Leuchtenträger (3), wobei der Befestigungsbereich (6) zur Gegenlagerung an dem Leuchtenträger (3) einen Fuß (7) mit einem zwei Spreizelemente (8.1) umfassenden Spreizpaar (8) aufweist und die Spreizelemente (8.1) zur Verrastung in oder an einer vorgesehenen Befestigungsausnehmung (4) des Leuchtenträger (3) senkrecht oder etwa senkrecht zu einer vorgesehenen Einsetzrichtung (e) des Befestigungselementes (1) in den Leuchtenträger (3) unter Ausbildung einer Federvorspannung gegenläufig zueinander federelastisch auslenkbar ausgebildet sind, **dadurch gekennzeichnet, dass** die Spreizelemente (8.1) jeweils blattfederartig mit einem freien Ende (8.2) und die freien Enden (8.2) der Spreizelemente (8.1) spitz zulaufend ausgebildet sind, um sich endseitig in die Wandung des Leuchtenträgers (3) eingraben und damit stärker festsetzen zu können, und dass die Spreizelemente (8.1) und/oder der Fuß (7) mit einer Erstreckungskomponente gegen Einsetzrichtung (e) umgebogen ausgebildet sind.

2. Befestigungselement (1) nach Anspruch 1, **dadurch gekennzeichnet , dass** sich die Spreizelemente (8.1) mit einer Erstreckungskomponenten gegen Einsetzrichtung (e) und mit einer Erstreckungskomponente bezüglich einer Mittelachse des Befestigungselementes (1) seitlich von dem Befestigungsbereich (6) weg erstrecken.

3. Befestigungselement (1) nach Anspruch 1 oder 2, **dadurch gekennzeichnet, dass** an dem vom Fuß (7) abgewandten Ende des Befestigungsbereiches (6) eine Aufnahme für den Haltebereich (5) des Befestigungselementes (1) vorgesehen ist.

4. Befestigungselement (1) nach Anspruch 3, **dadurch gekennzeichnet , dass** die Aufnahme (13) ein einen Aufnahmeraum (16) begrenzendes Klauenpaar (17) aufweist, dessen Klauen (17.1) sich mit ihren freien Enden (17.2) senkrecht zur Einsetzrichtung (e) erstreckend angeordnet sind.

5. Befestigungselement (1) nach Anspruch 3 oder 4, **dadurch gekennzeichnet, dass** der Haltebereich (5) einen sich quer zur Einsetzrichtung (e) vorkragenden Haltearm (19.1) zur in Einsetzrichtung (e) vorderseitigen Anlage an dem Modul (M), insbesondere der Platine (P), aufweist, wobei der Haltebereich (5) relativ zum Befestigungsbereich (6) zwischen einer Offenposition und einer Halteposition verdrehbar in der Aufnahme (13) gelagert ist.

6. Befestigungselement (1) nach Anspruch 5, **dadurch gekennzeichnet, dass** der Haltebereich (5) und der Befestigungsbereich (6) in der Offenposition und/oder in der Halteposition aneinander verrastbar sind.

7. Befestigungselement (1) nach einem der Ansprüche 3 bis 6, **dadurch gekennzeichnet, dass** zwischen Aufnahme (13) und Fuß (7) ein bezüglich der Einsetzrichtung (e) federwirksamer Federbereich (10) vorgesehen ist.

8. Befestigungselement (1) nach einem der Ansprüche 1 bis 7, **dadurch gekennzeichnet, dass** der gesamte Haltebereich (5) einstückig ausgebildet und/oder der gesamte Befestigungsbereich (6) einstückig aus einem Federblech gefertigt sind.

9. Befestigungselement (1) nach einem der Ansprüche 2 bis 8, **dadurch gekennzeichnet, dass** die beiden Spreizelemente (8.1) des Spreizpaares (8) bezüglich der Mittelachse (m) einander gegenüber liegend angeordnet sind.

10. Befestigungselement (1) nach einem der Ansprüche 1 bis 9, **dadurch gekennzeichnet, dass** der Fuß zwei Spreizpaare (8) aufweist, die bezüglich einer ersten Querrichtung (q1) senkrecht zur Einsetzrichtung (e) beabstandet zueinander angeordnet sind.

11. Befestigungssystem (1) zur Befestigung eines elektronischen Moduls (M), wie Platine (P), auf einem Leuchtenträger (3), mit einem ein Spreizpaar (8) aufweisenden Fuß (7) und einem Haltebereich (5) zur Niederhaltung eines elektronischen Moduls (M), wie Platine (P), aufweisenden Befestigungselement (1) nach einem der Ansprüche 1 bis 10 und einer an einem Leuchtenträger (3) vorgesehene Befestigungsausnehmung (4), in der das Befestigungselement (1) mit seinem Fuß (7) in Einsetzrichtung (e) lageunveränderlich einsetzbar ist, wobei das Spreizpaar (8) unter Gegenlagerung des Befestigungselementes in der Befestigungsausnehmung (4) federelastisch innenwandig verspannt sowie/oder das Spreizpaar (8) die Befestigungsausnehmung (4) durchgreift beziehungsweise aus derselben hervorragt und, unter Niederhaltung des elektronischen Moduls (M) in Einsetzrichtung (e) mittels des Haltebereichs (5), gegen Einsetzrichtung (e) formschlüssig an einem die Befestigungsausnehmung (4) in Einsetzrichtung (e) hinten begrenzenden Ausnehmungsrand anliegt.

12. Befestigungssystem (1) nach Anspruch 11, **dadurch gekennzeichnet, dass** die Befestigungsausnehmung (4) als Nut (4.1) oder Langloch (4.2) ausgebildet ist.

13. Befestigungssystem (1) nach Anspruch 11 oder 12, **dadurchgekennzeichnet**, dass die freien Enden (8.1) in einem zur Einsetzrichtung (e) radialem Abstand angeordnet sind, der größer als der der radial einander gegenüberliegenden Innenwände der Befestigungsausnehmung (4) ist.

## Claims

1. Fastening element (1), comprising a holding area (5) to hold down an electronic module (M) such as a circuit board (P), in particular a circuit board (P) fitted with LEDs (L), on a light holder (3), and a fastening area (6) to be supported against the light holder (3), wherein the fastening area (6), for supporting against the light holder (3), comprises a base (7) having a spreader pair (8) comprising two spreader elements (8.1), wherein the spreader elements (81) are designed in such a way that the spreader elements can be deflected resiliently in opposite directions to each other for locking in or on a fastening recess (4) provided on the light holder (3) perpendicularly or approximately perpendicularly to an intended insertion direction (e) of the fastening element (1) into the light holder (3) while creating a spring bias, **in opposite directions**
**characterized in that** the spreader elements (8.1) each have a leaf spring-like construction with a free end (8.2), and the free ends (8.2) of the spreader elements (8.1) are designed in a tapered manner to dig into the wall of the light holder (3) on the end side thereof and hence being fixed more strongly, and that the spreader elements (8.1) and/or the base (7) are configured in a manner bent against the insertion direction (e) with one extension component.

2. Fastening element (1) according to claim 1, **characterized in that** the spreader elements (8.1) extend against the insertion direction (e) with one extension component and extend laterally away from the fastening area (6) with respect to a central axis of the fastening element (1) with one extension component.

3. Fastening element (1) according to claim 1 or 2, **characterized in that** a receiving structure for the holding area (5) of the fastening element (1) is provided on the end of the fastening area (6) facing away from the base (7).

4. Fastening element (1) according to claim 3, **characterized in that** the receiving structure (13) comprises a claw pair (17) defining a receiving space (16), with the claws (17.1) of the claw pair arranged so as to extend with the free ends thereof perpendicularly to the insertion direction (e) .

5. Fastening element (1) according to claim 3 or 4, **characterized in that** the holding area (5) has a holding arm (19.1) projecting transversely to the insertion direction (e) for bearing against the module (M), in particular the circuit board (P), at the front side in the insertion direction (e), wherein the holding area (5) is supported in the receiving structure (13) so as to be rotatable between an open position and a holding position relative to the fastening area (6).

6. Fastening element (1) according to claim 1, **characterized in that** the holding area (5) and the fastening area (6) are lockable to one another in the open position and/or in the holding position.

7. Fastening element (1) according to one of the claims 3 to 6, **characterized in that** between the receiving structure (13) and the base (7) there is provided a spring region (10) that acts in a resilient manner with respect to the insertion direction (e).

8. Fastening element (1) according to one of the claims 1 to 7, **characterized in that** the entire holding area (5) is formed as one piece and/or the entire fastening area (6) is formed as one piece from a spring steel sheet.

9. Fastening element (1) according to one of the claims 2 to 8, **characterized in that** said two spreader elements (8.1) of the spreader pair (8) are arranged oppositely to one another with respect to the central axis (m).

10. Fastening element (1) according to one of the claims 1 to 9, **characterized in that** the base comprises two spreader pairs (8) arranged spaced from each other perpendicularly to the insertion direction (e) with respect to a first transverse direction (q1).

11. Fastening system (1) for fastening an electronic module (M) such as a circuit board (P) to a light holder (3), the system comprising a fastening element (1) according to one of the claims 1 to 10 having a base (7) with a spreader pair (8) and a holding area (5) to hold down an electronic module (M) such as a circuit board (P), and a fastening recess (4) which is provided on the light holder (3) and into which the fastening element (1) can be inserted with its base (7) in the insertion direction (e) and fixed in position, wherein the spreader pair (8) is resiliently braced at the inner wall in the fastening recess (4) and/or the spreader pair (8) passes through the fastening recess (4) or protrudes from the latter and bears against the rim of the recess delimiting the fastening recess (4) at the rear in the insertion direction (e) in a form-fitting manner against the insertion direction (e) while holding down the electronic module (M) in the insertion direction (e) by means of the holding area (5).

12. Fastening system (1) according to claim 11, **characterized in that** the fastening recess (4) is formed as a groove (4.1) or an elongate hole (4.2).

13. Fastening system (1) according to claim 11 oder 12, **characterized in that** the free ends (8.1) are arranged at a radial distance in the insertion direction (e) which is larger than that of the radially mutually opposite inner walls of the fastening recess (4).

## Revendications

1. Élément de fixation (1), comprenant une partie de maintien (5) pour maintenir en place un module électronique (M) tel qu'une platine (P), plus particulièrement une platine (P) dotée de DELs (L), sur un support d'éclairage (3), et une partie de fixation (6) pour le supporter contre le support d'éclairage (3), la partie de fixation (6) comprenant, pour le support contre le support d'éclairage (3), un pied (7) avec une paire de moyens expansibles (8) comprenant deux éléments expansibles (8.1), et lesdits éléments expansibles (8.1) étant réalisés de façon à pouvoir fléchir élastiquement l'un par rapport à l'autre, pour s'encliqueter dans ou sur un évidemment de fixation (4) prévu du support d'éclairage (3) verticalement ou sensiblement verticalement par rapport à un sens d'insertion (e) prévu de l'élément de fixation (1), en formant une précontrainte de ressort,
**caractérisé en ce que** les éléments expansibles (8.1) sont respectivement réalisés sous la forme d'un ressort à lame avec une extrémité libre (8.2), et les extrémités libres (8.2) des éléments expansibles (8.1) sont réalisées de manière pointue pour pouvoir s'enfoncer aux extrémités dans la paroi du support d'éclairage (3) et ainsi se fixer plus fortement, et que les éléments expansibles (8.1) et/ou le pied (7) sont réalisés de façon à être recourbés contre le sens d'insertion (e) avec une composante directionnelle.

2. Élément de fixation (1) selon la revendication 1, **caractérisé en ce que** les éléments expansibles (8.1) s'étendent contre le sens d'insertion (e) avec une composante directionnelle et latéralement à l'écart de la partie de fixation (6) par rapport à un axe central de l'élément de fixation avec une composante directionnelle.

3. Élément de fixation (1) selon la revendication 1 ou 2, **caractérisé en ce qu'**à l'extrémité de la partie de fixation (6) détournée du pied (7) est prévu un logement pour la partie de maintien (5) de l'élément de fixation (1) .

4. Élément de fixation (1) selon la revendication 3, **caractérisé en ce que** le logement (13) comporte une paire de griffes (17) délimitant un espace de logement (16), griffes (17.1) qui sont disposées de façon à s'étendre, avec ses extrémités libres (17.2), verticalement par rapport au sens d'insertion (e).

5. Élément de fixation (1) selon la revendication 3 ou 4, **caractérisé en ce que** la partie de maintien (5) comporte un bras de support (19.1) transversalement saillant par rapport au sens d'insertion, pour prendre appui, sur sa face avant au sens d'insertion, sur le module (M), plus particulièrement sur la platine (P), la partie de maintien (5) étant montée dans le logement (13) de façon à être mobile en rotation entre une position ouverte et une position de retenue par rapport à la partie de fixation (6) .

6. Élément de fixation (1) selon la revendication 5, **caractérisé en ce que** la partie de maintien (5) et la partie de fixation (6) peuvent être encliquetées l'une dans l'autre dans la position ouverte et/ou dans la position de maintien.

7. Élément de fixation (1) selon l'une des revendications 3 à 6, **caractérisé en ce qu'**entre le logement (13) et le pied (7) est prévue une zone élastique (10) élastiquement active par rapport au sens d'insertion (e).

8. Élément de fixation (1) selon l'une des revendications 1 à 7, **caractérisé en ce que** l'ensemble de la partie de maintien (5) est réalisée en une pièce et/ou l'ensemble de la partie de fixation (6) est réalisée en une pièce à partir d'une tôle à ressort.

9. Élément de fixation (1) selon l'une des revendications 2 à 8, **caractérisé en ce que** les deux éléments expansibles (8.1) de la paire de moyens expansibles (8) sont disposés mutuellement en vis-à-vis par rapport à l'axe central (m).

10. Élément de fixation (1) selon l'une des revendications 1 à 9, **caractérisé en ce que** le pied (7) comporte deux paires de moyens expansibles (8) écartées l'une de l'autre verticalement au sens d'insertion par rapport à un premier sens transversal (q1).

11. Système de fixation (1), pour la fixation d'un module électronique (M) tel qu'une platine (P) sur un support d'éclairage (3), comprenant un élément de fixation (1) selon l'une des revendications 1 à 10, qui comporte un pied (7) avec une paire de moyens expansibles (8) et une partie de maintien pour maintenir en place un module électronique (M) telle qu'une platine (P), et comprenant un évidemment de fixation (4) dans lequel peut être inséré ledit élément de fixation (1) par son pied (7) dans le sens d'insertion (e) et de manière invariable en position, ladite paire de moyens expansibles (8) étant serrées élastiquement sur la paroi intérieure sous contre-support de l'élément de fixation dans l'évidemment de fixation (4) et/ou la paire de moyens expansibles (8) traversant ledit évidemment de fixation (4) ou faisant saillie sur celui-ci et reposant, contre le sens d'insertion, en complémentarité de forme sur un bord de l'évidemment délimitant à l'arrière l'évidemment de fixation (4) dans le sens d'insertion (e), en maintenant en place le module électronique (M) dans le sens d'insertion (e) au moyen de la partie de maintien (5).

12. Système de fixation (1) selon la revendication 11, **caractérisé en ce que** l'évidemment de fixation (4) est réalisé sous la forme de rainure (4.1) ou trou oblong.

13. Système de fixation (1) selon la revendication 11 ou 12, **caractérisé en ce que** les extrémités libres (8.1) sont disposées à une distance radiale par rapport au sens d'insertion (e) supérieure à la distance des parois intérieures de l'évidemment de fixation (4) mutuellement en vis-à-vis.
